# EUROPÄISCHE PATENTSCHRIFT

(11) **EP 1 052 408 B1**
(45) Veröffentlichungstag und Bekanntmachung des Hinweises auf die Patenterteilung: **16.03.2005**
(21) Anmeldenummer: 00250011.4
(22) Anmeldetag: 13.01.2000
(51) Int. Cl.: F04B 53/16

(54) **Gehäuseanordnung einer hydraulischen Pumpe und deren Antriebseinheit**
Housing of a hydraulic pump and drive unit
Carter pour pompe hydraulique et son dispositif d'entraînement

(30) Priorität: 14.05.1999 DE 19922947
(43) Veröffentlichungstag der Anmeldung: 15.11.2000
(73) Patentinhaber: Demag Ergotech GmbH, 90571 Schwaig (DE)
(72) Erfinder: Dieno, Kurt,Dipl.Ing.,, 90574 Rosstal (DE); Kübel, Andreas,Dipl.Ing.,, 91207 Lauf (DE); Popp, Hans-Jürgen, Dipl.Ing.,, 91322 Gräfenberg (DE); Würl, Ernst, 91798 Höttingen (DE)
(74) Vertreter: Meissner, Peter E., Dipl.-Ing.

(56) Entgegenhaltungen:
- EP-A- 0 088 674
- EP-A- 0 819 852
- DE-A- 3 705 608
- DE-A- 3 916 908
- DE-U- 29 503 117

## Beschreibung

Die Erfindung betrifft eine Antriebseinheit für hydraulische Verbraucher einzelner Bauteile einer Maschine zur Herstellung von Formteilen aus Gießmassen, insbesondere eine Kunststoffspritzgießmaschine, mit einer von einem Motor angetriebenen Pumpe, wobei die Pumpe und/oder der Motor über ein Tragteil mit der Maschine verbunden ist.

Lärm wird auch in Arbeitsräumen immer mehr als Belästigung angesehen. Es besteht daher die Forderung Maßnahmen zu ergreifen, Antriebseinheiten für hydraulische Verbraucher, die eine Pumpe und einen Motor aufweisen, soweit wie möglich Schall zu isolieren.

Aus DE 298 18 533 U1 ist eine Antriebseinheit für eine hydraulisch betriebene Kunststoffverarbeitungsmaschine bekannt, bei der im wesentlichen nur die Pumpe von Mitteln zur Schallkapselung umgeben ist. Bei dieser Antriebseinheit ist der elektrische Motor und die Pumpe an einem Motorträger befestigt, wobei das System aus Motorpumpe und Motorträger schallabsorbierend gelagert ist.

Es zeigt sich, daß der Einsatz einer Schallschutzhaube für das Pumpenaggregat nicht ausreicht, um die Schallemission wirksam zu mindern.

Aus DE 197 50 379 A1 ist eine Baueinheit mit einem elektrischen Generator und einem Pumpenaggregat bekannt, bei dem das Gehäuse der Pumpe aus den die Ausnehmung bildenden Wänden des Generatorgehäuses und einem die Ausnehmung des Generatorgehäuses flüssigkeitsdicht abschließenden Pumpendeckel besteht, der einen in der Ausnehmung des Generatorgehäuses mündenden Sauganschluß aufweist, und wobei mindestens ein Wegeventil zumindestens teilweise in den Pumpendeckel integriert und/oder mindestens ein Wegeventil auf den Pumpendeckel aufgesetzt ist.

Als Kühlmittel für den Generator wird das von der Pumpe angesaugte Hydrauliköl verwendet, mit dem das Innere der Ausnehmungen durchströmt ist. Hiermit soll ein Überhitzen des Generators sicher verhindert werden.

Die hier bekannte Baueinheit wird von einem Verbrennungsmotor angetrieben und dient im wesentlichen Bauteile in einem Kraftfahrzeug zu betreiben.

Die Erfindung hat das Ziel, die Schallemission einer Antriebseinheit für hydraulische Verbraucher einzelner Bauteile, insbesondere einer Kunststoffspritzgießmaschine besonders wirkungsvoll zu mindern und gleichzeitig eine einfache Abfuhr der Betriebswärme der Einzelaggregate zu gewährleisten.

Die Erfindung erreicht das Ziel durch die Merkmale des Anspruchs 1. Die nachfolgenden Ansprüche sind vorteilhafte Weiterbildungen der Erfindung.

Erfindungsgemäß wird das die Pumpe und den Motor treibende Tragteil rohrförmig ausgestaltet und die beiden Rohrenden werden durch einen Boden und/oder einen Deckel verschlossen. In den Freiraum des rohrförmigen ggf. topfförmigen Tragteils ragt die Pumpe hinein und zwar in der Weise, daß sie auf der den Motor abgewandten Seite am Tragteil befestigt ist. Der Bereich des Tragteils, an dem die Befestigung der Pumpe vorgesehen ist, ist als Anschlußblock ausgestaltet. Auf diese Weise befinden sich keinerlei Rohrleitungen im Freiraum des Tragteils, die üblicherweise Wärme abstrahlen und Schall emittieren.

Der Anschlußblock ist mit einem Steuerblock verbunden. In einer vorteilhaften Ausgestaltung sind Anschlußblock und Steuerblock im Deckel bzw. Boden des Tragteils integriert.

Auf der der Pumpenbefestigung gegenüberliegenden Seite ist der Motor befestigt. Pumpe und Motor sind durch eine Drehsteuerverkupplung miteinander verbunden. In einer vorteilhaften Ausgestaltung ist diese Kupplung als Vielkeilprofil ausgestaltet.
Vorzugsweise wird bei der aus einem Vater- und Mutterteil bestehenden Kupplung mit einem Vielkeilprofil die Motorwelle als Hohlwelle ausgebildet.

Das rohrförmige Tragteil kann dabei in einer Weise ausgestaltet sein, daß nur die Pumpe sich in einer schallisolierten Kammer befindet, oder sowohl die Pumpe wie auch der Motor in einer Kammer vorgesehen sind oder sowohl für den Motor wie für die Pumpe eine eigene Kammer eingerichtet ist. Soweit die Pumpe und der Motor voneinander getrennt sind, ist in dem Boden oder im Deckel des Tragteils eine Öffnung vorgesehen, durch die vorzugsweise die Hohlwelle des Motors geführt ist, welche die Welle der Pumpe umhüllt.

Der Freiraum der jeweiligen Kammer ist mit einem Fluid füllbar. Dieses Fluid kann fest in der Kammer eingeschlossen sein oder auch über Rohrleitungen mit einer Medienkühl und -Fördereinrichtung verbunden sein.

Soweit nur eine Kammer bei dem rohrförmigen Tragteil vorgesehen ist und die Pumpe und der Motor voneinander getrennt angeordnet sind, ist in der Öffnung des Deckels bzw. Bodens eine Dichtung vorgesehen.

Das Tragteil ist über Schwingmetalle mit der Maschine schallentkoppelt verbunden. Das Tragteil kann dabei auf der Maschine stehen oder auch an ihr hängen.

In einer vorteilhaften Ausgestaltung sind zur Erhöhung der Wärmeabstrahlung Formelemente, beispielsweise Rippen vorgesehen, um die Oberfläche des Traggehäuses zu erhöhen. Soweit das Tragteil ein Gußteil ist, kann die Formgebung des Mantels sowohl in Bezug auf die äußere Form der Pumpe bzw. des Motors wie auch der Maximierung der Wärmeabfuhr wie der Minimierung der Schallemission optimierit werden.

Weiterhin ist von besonderem Vorteil, daß beim Einsatz eines Gußteils durch die hierbei vorhandene Masse auch die energiereichen niederfrequenten Geräusche (die tiefen Töne) wirkungsvoll absorbiert werden.

Ein Beispiel der Erfindung ist in der beigefügten Zeichnung dargelegt. Dabei zeigt die
- Figur 1: das Tragteil mit einer Kammer für die Pumpe,
- Figur 2: das Tragteil mit einer Kammer für Pumpe und Motor,
- Figur 3: das Tragteil mit zwei Kammern jeweils für Pumpe und Motor.

Alle drei Figuren zeigen ein Tragteil 11 mit einem rohrförmigen Bereich 12, der durch einen Boden 13 und/oder einen Deckel 14 beidendig verschlossen ist. Die Antriebseinheit weist dabei einen Motor 21 und eine mit ihm über eine Kupplung 41 verbundene Pumpe 31 auf Weiterhin ist der Tragteil 11 an einer nicht weiter dargestellten Maschine 10 befestigt und über Schwingelemente von dieser schallentkoppelt angeordnet.

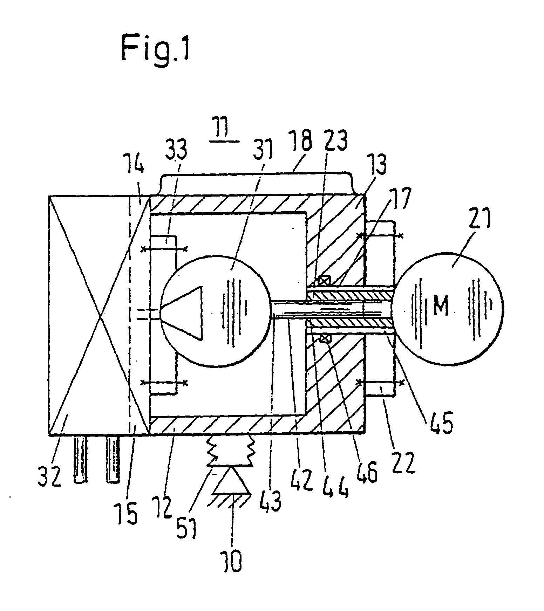

In der Figur 1 ist der Tragteil 11 topfförmig ausgestaltet und weist einen mit dem rohrförmigen Bereich 12 fest verbundenen Boden 13 auf. An der Außenseite des Bodens 13 ist der Motor 21 mit seinem Flansch 22 befestigt. Die Motorwelle 23 ist als Hohlwelle 45 ausgestaltet und wird durch eine Öffnung 17 des Bodens 13 geführt. Zwischen der Außenseite der Hohlwelle 45 und der Innenwand der Öffnung 17 ist eine Dichtung 46 angeordnet.

Die Innenwand der Hohlwelle 45 weist ein Vielkeilprofil 44 auf, welches mit einem Vielkeilprofil 42 der Pumpenwelle 43 korrespondiert.

Die Pumpe 31 ist über einen Pumpenflansch 33 mit einem als Anschlußblech 15 und mit diesem integrierten Steuerblock 32 verbunden.

Weiterhin sind am Außenmantel des Tragteils 11 Rippen 18 vorgesehen.

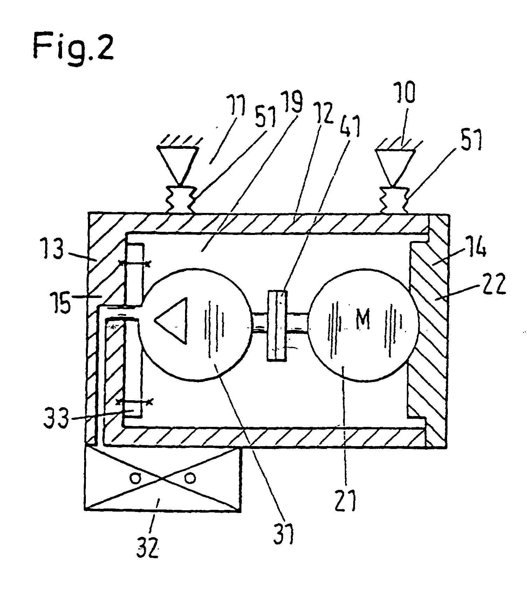

In der Figur 2 ist der Tragteil 11 über Schwingmetalle 51 an der nicht weiter dargestellten Maschine 10 aufgehängt.

Der Tragteil 11 umhüllt sowohl die Pumpe 31 wie auch den mit ihr über eine Kupplung 41 verbundenen Motor 21. Der Motorflansch 22 ist im vorliegenden Fall als Deckel 41 ausgebildet und unmittelbar an dem rohrförmigen Bereich 12 des Tragteils 11 befestigt.

In der Figur 2 ist der Pumpenflansch am als Anschlußblock 15 ausgestalteten Boden 13 des Tragteils befestigt. An den Anschlußflansch 15 ist ohne die Verwendung von Rohren unmittelbar der Steuerblock 32 angeordnet.

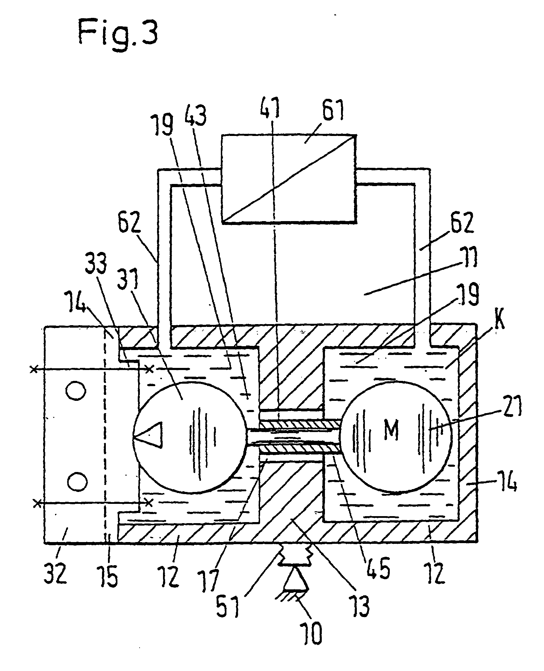

In der Figur 3 weist der über Schwingmetalle 51 an der nicht weiter dargestellten Maschine 10 befestigte Tragteil 11 zwei Kammern auf, die über den Boden 13 getrennt sind und jeweils über Deckel 14 verschlossen werden. Durch eine Öffnung 17 im Boden 13 sind die Rohrleitungen 45 und die Welle 43 der Kupplung 41 geführt.

Die Freiräume 19 sowohl im Bereich des Motors 21 wie auch im Bereich des Motors 31 ist mit einem Kühlmedium K gefüllt. In der Figur 3 ist eine Medienkühl und - Fördereinrichtung 61 vorgesehen, die über Rohrleitungen 62 mit den Freiräumen 19 des Tragteils 11 in Verbindung stehen.

Der Pumpenflansch 33 ist in einer Weise ausgestaltet, daß der nicht nur als Deckel 14 dient, sondern auch eine Einheit bildet mit dem Anschlußflansch 15 und dem Steuerblock 32.

### Positionsliste

### Maschine

- 11: Tragteil
- 12: rohrförmiger Bereich
- 13: Boden
- 14: Deckel
- 15: Anschlußblock
- 16: Steuerblock
- 17: Öffnung
- 18: Rippe
- 19: Freiraum

### Motoreinheit

- 21: Motor
- 22: Flansch
- 23: Motorwelle

### Pumpeneinheit

- 31: Pumpe
- 32: Steuerblock

### Kupplungseinheit

- 41: Kupplung
- 42: Vielkeilprofil Vaterteil
- 43: Welle
- 44: Vielkeilprofil Mutterteil
- 45: Hohlwelle

### Dämpfen

- 51: Schwingmetalle

### Kühlen

- 61: Medienkühl und -Fördereinrichtung
- 62: Rohrleitung
- K: Kühlmedium

## Patentansprüche

1. Antriebseinheit für hydraulische Verbraucher einzelner Bauteile einer Maschine zur Herstellung von Formteilen aus Gießmassen, insbesondere eine Kunststoffspritzgießmaschine, mit einer von einem Motor angetriebenen Pumpe, wobei die Pumpe und/oder der Motor über ein Tragteil mit der Maschine verbunden ist,
**dadurch gekennzeichnet,**
**daß** das Tragteil (11) einen eine rohrförmige Gestalt besitzenden Bereich (12) aufweist, der beidendig durch einen Boden (13) und/oder Deckel (14) verschlossen ist,
**daß** mindestens die Pumpe (31) in das Tragteil (11) hineinragend von diesem umhüllt wird,
**daß** die Pumpe (31) auf der dem Motor (21) abgewandten Seite am Tragteil (11) befestigt ist, und
**daß** ein Bereich des Tragteils (11) als Anschlußblock (15) ausgestaltet ist.

2. Antriebseinheit nach Anspruch 1,
**dadurch gekennzeichnet,**
**daß** der Boden (13) oder der Deckel (14) des Tragteils (11) auf der der Pumpe (31 ) abgewandten Seite als Motorflansch (22) ausgebildet ist.

3. Antriebseinheit nach Anspruch 2,
**dadurch gekennzeichnet,**
**daß** der mit dem Motor (21) verbundene Boden (13) des Tragteils (11) eine Öffnung (17) aufweist, durch die die Motorwelle (23) des Motors (21) führbar ist.

4. Antriebseinheit nach einem der oben genannten Ansprüche,
**dadurch gekennzeichnet,**
**daß** die Pumpe (31) und der Motor (21) über eine Kupplung (41) drehsteif miteinander verbunden sind.

5. Antriebseinheit nach Anspruch 4,
**dadurch gekennzeichnet,**
**daß** die Kupplung (41) ein Vielkeilprofil (42, 43) aufweist.

6. Antriebseinheit nach Anspruch 5,
**dadurch gekennzeichnet,**
**daß** ein Kupplungsteil (45) der ein Vielkeilprofil (44) aufweisenden Kupplung (41) eine mit dem Motor (21) verbundene Hohlwelle (45) ist.

7. Antriebseinheit nach Anspruch 1,
**dadurch gekennzeichnet,**
**daß** am Tragteil (11) Schwingmetalle (51) vorgesehen sind, mit denen es an der Maschine (10) schallentkoppelt befestigt ist.

8. Antriebseinheit nach Anspruch 1,
**dadurch gekennzeichnet,**
**daß** die Mantelfläche des rohrförmigen Bereichs (12) des Tragteils (11) eine Form besitzt, die eine größtmögliche Wärmeabstrahlung zuläßt, z.B. Rippen (18).

9. Antriebseinheit nach Anspruch 7,
**dadurch gekennzeichnet,**
**daß** der Freiraum zwischen der Außenfläche der Pumpe (31) und/oder des Motors (21) und der Innenfläche des Tragteils (11) mit einem Kühlmedium (K) füllbar ist.

10. Antriebseinheit nach Anspruch 9,
**dadurch gekennzeichnet,**
**daß** das Tragteil (11) über Rohrleitungen (62) mit einer Medienkühl und -Fördereinrichtung (61) verbunden ist.

11. Antriebseinheit nach einem der o.g. Ansprüche,
**dadurch gekennzeichnet,**
**daß** das Tragteil (11) ein insbesondere als Gußteil ausgebildeter mit einem Deckel (14) verschließbarer Topf ist, in dessen Freiraum (19) mindestens die Pumpe (31) am Boden (13) des Topfes lösbar befestigt angeordnet ist.

## Claims

1. A drive unit for hydraulic consumers of individual components of a machine for producing moulded parts from casting compounds, in particular a plastics injection-moulding machine, comprising a motor-driven pump, the pump and/or the motor being connected to the machine by means of a supporting part, **characterised in that**
the supporting part (11) has a region (12) of tubular shape which is closed at both ends by a base (13) and/or cover (14),
at least the pump (31), which projects into the supporting part (11), is surrounded thereby,
the pump (31) is fastened to the supporting part (11) on the side remote from the motor (21), and
that a region of the supporting part (11) is designed as a connection block (15).

2. A drive unit according to Claim 1, **characterised in that** the base (13) or the cover (14) of the supporting part (11) is formed as a motor flange (22) on the side remote from the pump (31).

3. A drive unit according to Claim 2, **characterised in that** the base (13) of the supporting part (11) which is connected to the motor (21) has an opening (17) through which the motor shaft (23) of the motor (21) can be passed.

4. A drive unit according to one of the above claims, **characterised in that** the pump (31) and the motor (21) are connected together via a coupling (41) so as to be torsion-proof.

5. A drive unit according to Claim 4, **characterised in that** the coupling (41) has a multiple-spline profile (42, 43).

6. A drive unit according to Claim 5, **characterised in that** a coupling part (45) of the coupling (41) which has a multiple-spline profile (44) is a hollow shaft (45) connected to the motor (21).

7. A drive unit according to Claim 1, **characterised in that** rubber-metal connections (51) are provided on the supporting part (11), by means of which connections it is fastened in acoustically isolated manner to the machine (10).

8. A drive unit according to Claim 1, **characterised in that** the generated surface of the tubular region (12) of the supporting part (11) is of a form which permits maximum dissipation of heat, e.g. ribs (18).

9. A drive unit according to Claim 7, **characterised in that** the gap between the outer surface of the pump (31) and/or the motor (21) and the inner surface of the supporting part (11) can be filled with a cooling medium (K).

10. A drive unit according to Claim 9, **characterised in that** the supporting part (11) is connected via pipes (62) to a media cooling and conveying means (61).

11. A drive unit according to one of the preceding claims, **characterised in that** the supporting part (11) is a pot, designed in particular as a casting, which can be closed with a cover (14), in the gap (19) of which pot at least the pump (31) is arranged fastened detachably to the base (13) of the pot.

## Revendications

1. Unité d'entraînement destinée à des consommateurs hydrauliques de composants individuels d'une machine de fabrication de pièces moulées à partir de masses fondues, notamment d'une machine de moulage par injection de matière plastique, comportant une pompe entraînée par un moteur, la pompe et/ou le moteur étant reliés à la machine par l'intermédiaire d'un élément de support,
**caractérisée en ce que**
l'élément de support (11) comporte une zone (12) de forme tubulaire, dont les deux extrémités sont fermées par un fond (13) et/ou par un couvercle (14),
au moins la pompe (31) pénètre dans l'élément de support (11), et est entourée par celui-ci,
la pompe (31) est fixée sur l'élément de support (11) du côté opposé au moteur (21), et
une zone de l'élément de support (11) est agencée en tant que bloc de raccordement (15).

2. Unité d'entraînement selon la revendication 1,
**caractérisée en ce que**,
du côté opposé à la pompe (31), le fond (13) ou le couvercle (14) de l'élément de support (11) est réalisé en tant que bride de moteur (22).

3. Unité d'entraînement selon la revendication 2,
**caractérisée en ce que**
le fond (13) de l'élément de support (11) relié au moteur (21) comporte une ouverture (17), à travers laquelle peut passer l'arbre (23) du moteur (21).

4. Unité d'entraînement selon l'une quelconque des revendications précédentes,
**caractérisée en ce que**
la pompe (31) et le moteur (21), sont reliés solidairement en rotation entre eux par l'intermédiaire d'un accouplement (41).

5. Unité d'entraînement selon la revendication 4,
**caractérisée en ce que**
l'accouplement (41) comporte un profil cannelé à cales multiples (42, 43).

6. Unité d'entraînement selon la revendication 5,
**caractérisée en ce que**
un élément d'accouplement (45) de l'accouplement (41) à profil cannelé à cales multiples (44) est un arbre creux (45) relié au moteur (21).

7. Unité d'entraînement selon la revendication 1,
**caractérisée en ce que**
des silentblocs (51) sont prévus sur l'élément de support (11), avec lesquels il est fixé à la machine (10) en étant découplé du point de vue acoustique.

8. Unité d'entraînement selon la revendication 1,
**caractérisée en ce que**
la surface d'enveloppe de la zone tubulaire (12) de l'élément de support (11) possède une forme, par exemple des nervures (18), qui permet une dissipation de chaleur aussi importante que possible.

9. Unité d'entraînement selon la revendication 7,
**caractérisée en ce que**
l'espace libre entre la face extérieure de la pompe (31) et/ou du moteur (21) et la face intérieure de l'élément de support (11) peut être rempli d'un fluide de refroidissement (K).

10. Unité d'entraînement selon la revendication 9,
**caractérisée en ce que**
l'élément de support (11) est relié à un dispositif de refroidissement et de transport de fluide (61) par l'intermédiaire des tuyauteries (62).

11. Unité d'entraînement selon l'une quelconque des revendications précédentes,
**caractérisée en ce que**
l'élément de support (11) est un pot pouvant être fermé par un couvercle (14), qui est notamment réalisé sous la forme d'une pièce coulée, dans l'espace libre (19) duquel au moins la pompe (31 ) est fixée de façon amovible sur le fond (13) du pot.
